# EUROPÄISCHE PATENTSCHRIFT

(11) **EP 3 576 984 B1**
(45) Veröffentlichungstag und Bekanntmachung des Hinweises auf die Patenterteilung: **10.08.2022**
(21) Anmeldenummer: 18700583.0
(22) Anmeldetag: 16.01.2018
(51) Int. Cl.: B60Q 5/00

(54) **HUPENBETÄTIGUNGSEINHEIT**
HORN ACTUATION UNIT
UNITÉ D'ACTIONNEMENT D'AVERTISSEUR SONORE

(30) Priorität: 06.02.2017 DE 102017102217
(43) Veröffentlichungstag der Anmeldung: 11.12.2019
(73) Patentinhaber: ZF Automotive Safety Germany GmbH, 63743 Aschaffenburg (DE)
(72) Erfinder: BACHMANN, Stefan, 63872 Heimbuchenthal (DE)
(74) Vertreter: ZF Patentabteilung - DIPS
(86) Internationale Anmeldenummer: PCT/EP2018/050950
(87) Internationale Veröffentlichungsnummer: WO 2018/141540

(56) Entgegenhaltungen:
- EP-A1- 1 281 584
- EP-A1- 1 772 314
- EP-A2- 1 099 604
- WO-A1-2009/156153
- WO-A1-2010/136197
- DE-U1- 20 219 729
- DE-U1- 20 315 868
- DE-U1-202014 002 484

## Beschreibung

Die Erfindung betrifft eine Hupenbetätigungseinheit, insbesondere für ein mit einem Gassackmodul ausgestattetes Fahrzeuglenkrad, sowie ein Gassackmodul und ein Lenkrad mit einer solchen Hupenbetätigungseinheit.

Aus der Praxis sind Hupenbetätigungseinheiten bekannt, die zwischen einem Gassackmodul, insbesondere einem Fahrer-Airbagmodul, und einem Lenkrad angeordnet sind. Das Gassackmodul ist relativ zum Lenkrad beweglich, so dass durch Druck auf das Gassackmodul die Hupe ausgelöst und somit ein akustisches Signal erzeugt wird. Dazu weist ein Hupenmechanismus üblicherweise zwei Hupenkontaktgruppen auf, die in einem Ruhezustand voneinander beabstandet sind. In einem Betätigungszustand berühren sich zumindest einzelne Kontaktelemente der Hupenkontaktgruppen, so dass ein Hupenstromkreis geschlossen ist. Dadurch wird das akustische Warnsignal ausgelöst.

Die Hupenkontaktgruppen umfassen üblicherweise mehrere Kontaktelemente, die an unterschiedlichen Positionen zwischen dem Lenkrad und dem Gassackmodul angeordnet sind. Damit soll sichergestellt sein, dass die Auslösung des akustischen Warnsignals auch dann erfolgt, wenn exzentrisch auf das Gassackmodul gedrückt wird. Außerdem wird auf diese Weise eine Redundanz gewährleistet, so dass eine Auslösung des akustischen Warnsignals auch bei Defekt eines Kontaktelements erreicht werden kann. Die Kontaktelemente einer elektrischen Hupenkontaktgruppe sind untereinander elektrisch verbunden. Dazu sind Verbindungselemente vorgesehen, die im Stand der Technik meist als flache Stanzbleche ausgebildet sind. Alternative Gestaltungen im Stand der Technik sehen vor, dass die Kontaktelemente einer Hupenkontaktgruppe durch Verbindungsdrähte elektrisch gekoppelt sind, wobei die Verbindungsdrähte mit den Kontaktelementen verlötet sind.

Die bisher aus der Praxis bekannten Verbindungen der einzelnen Kontaktelemente einer Hupenkontaktgruppe untereinander haben verschiedene Nachteile. Bei Varianten, bei welchen die Kontaktelemente durch angelötete Verbindungsdrähte miteinander verbunden sind, ist der Herstellungsaufwand für die Hupenbetätigungseinheit erhöht. Insbesondere sind mehrere Herstellungsschritte erforderlich, die zu einem erhöhten Zeit- und somit Kostenaufwand führen. Bei Varianten, bei welchen die Kontaktelemente durch einstückig mit den Kontaktelementen ausgebildete Stanzbleche gebildet sind, ist der Raumbedarf für das Verbindungselement vergleichsweise hoch. Dies kollidiert mit den Anforderungen an moderne Lenkräder und Gassackmodule, die möglichst kompakt aufgebaut sein sollen. Diese Gestaltung von Verbindungselementen wird somit den gestiegenen Anforderungen an eine Miniaturisierung von Hupenmechanismen bzw. von Gassackmodulen oder Lenkrädern mit solchen Hupenbetätigungseinheiten kaum gerecht.

Die EP 1 099 604 A2 und die EP 1 281 584 A1 zeigen jeweils eine gattungsgemäße Hupenbetätigungseinheit für ein mit einem Gassackmodul ausgestatteten Fahrzeuglenkrad. Dabei sind eine erste elektrische Hupenkontaktgruppe und eine zweite elektrische Hupenkontaktgruppe vorgesehen, die jeweils wenigstens zwei durch ein Verbindungselement elektrisch verbundene Kontaktelemente aufweisen, wobei jedes Verbindungselement im Wesentlichen parallel zur Betätigungsrichtung ausgerichtet ist. Darüber hinaus sind die Verbindungselemente der beiden Hupenkontaktgruppen so in ein flexibles Kunststoffband eingebettet, dass sie in Betätigungsrichtung voneinander beabstandet sind und in einer gemeinsamen Ebene liegen, welche sich im Wesentlichen parallel zur Betätigungsrichtung erstreckt.

Die Aufgabe der Erfindung besteht darin, eine Hupenbetätigungseinheit, insbesondere für ein mit einem Gassackmodul ausgestattetes Fahrzeuglenkrad, anzugeben, die einen kompakten Aufbau aufweist und einfach herstellbar ist. Ferner ist es Aufgabe der Erfindung, ein Gassackmodul und ein Lenkrad mit einer solchen Hupenbetätigungseinheit anzugeben.

Erfindungsgemäß wird diese Aufgabe im Hinblick auf die Hupenbetätigungseinheit durch den Gegenstand des Patentanspruchs 1, im Hinblick auf das Gassackmodul durch den Gegenstand des Patentanspruchs 11 und im Hinblick auf das Lenkrad durch den Gegenstand des Patentanspruchs 12 gelöst.

Konkret beruht die Erfindung auf dem Gedanken, eine Hupenbetätigungseinheit, insbesondere für ein mit einem Gassackmodul ausgestattetes Fahrzeuglenkrad, anzugeben, wobei die Hupenbetätigungseinheit eine erste elektrische Hupenkontaktgruppe und eine zweite elektrische Hupenkontaktgruppe aufweist. Die Hupenkontaktgruppen weisen jeweils wenigstens zwei durch ein Verbindungselement elektrisch verbundene Kontaktelemente auf. Ferner sind die Kontaktelemente der Hupenkontaktgruppen entlang einer Betätigungsrichtung relativ zueinander bewegbar, so dass sich wenigstens zwei einander zugeordnete Kontaktelemente der ersten und zweiten Hupenkontaktgruppe zum Schließen eines Hupenstromkreises berühren können. Erfindungsgemäß ist das Verbindungselement der ersten Hupenkontaktgruppe und/oder der zweiten Hupenkontaktgruppe durch ein Blechumformteil gebildet. Dabei ist vorgesehen, dass das Verbindungselement parallel zur Betätigungsrichtung, insbesondere hochkant zur Bodenebene eines Trägers eines Hupenmechanismus der Hupenbetätigungseinheit, ausgerichtet ist.

Im Unterschied zu den aus dem Stand der Technik bekannten Stanzblechen ist bei der Erfindung somit vorgesehen, das Verbindungselement durch ein Blechumformteil zu bilden, das im Einbauzustand nicht parallel zur Bodenebene des Trägers des Hupenmechanismus, sondern senkrecht dazu angeordnet ist. Das spart Bauraum am Boden des Trägers, der für eine Miniaturisierung oder die Aufnahme zusätzlicher Bauteile genutzt werden kann. Insgesamt sorgt die Ausrichtung des Verbindungselements parallel zur Betätigungsrichtung des Hupenmechanismus dafür, dass eine Miniaturisierung der Hupenbetätigungseinheit insgesamt erreicht wird. Gleichzeitig wird durch die Verwendung eines Blechumformteils die Herstellung des Hupenmechanismus einfach gehalten. Die erfindungsgemäße Hupenbetätigungseinheit ist daher kostengünstig herstellbar.

Ein weiterer Vorteil der Verwendung eines Blechumformteils besteht darin, dass ein Blechumformteil grundsätzlich auch in sehr engen Bauräumen gut einem vorgegebenen Formverlauf folgen kann. Insofern sind Blechverläufe in engen Bauräumen gut realisierbar, was den Bestrebungen zur Miniaturisierung von Hupenbetätigungseinheiten bzw. Gassackmodulen und der Reduktion von Herstellungskosten zuträglich ist.

In diesem Zusammenhang wird darauf hingewiesen, dass die erfindungsgemäße Hupenbetätigungseinheit sowohl mit einem Gassackmodul, als auch mit einem Lenkrad verbindbar ist. Die Hupenbetätigungseinheit kann also entweder in ein Gassackmodul integriert bzw. an einem Gassackmodul befestigt oder als Bestandteil eines Fahrzeuglenkrads fest mit dem Fahrzeuglenkrad verbunden sein. Vorzugsweise ist dazu ein Träger vorgesehen, der entweder mit dem Gassackmodul oder dem Fahrzeuglenkrad verbindbar ist. Der Träger trägt den vollständigen Hupenmechanismus und weist einen Boden mit einer Bodenebene auf, die sich senkrecht zur Betätigungsrichtung erstreckt.

Grundsätzlich umfasst der Hupenmechanismus der Hupenbetätigungseinheit zwei Hupenkontaktgruppen, die jeweils ein Verbindungselement umfassen. Jedes Verbindungselement ist als Blechumformteil gebildet, das parallel zur Betätigungsrichtung bzw. hochkant zur Bodenebene des Trägers ausgerichtet ist. Erfindungsgemäß weist sowohl die erste Hupenkontaktgruppe, als auch die zweite Hupenkontaktgruppe ein Verbindungselement auf, das durch das parallel zur Betätigungsrichtung ausgerichtete Blechumformteil gebildet ist. Mit anderen Worten kann der Hupenmechanismus zwei Blechumformteile aufweisen, die jeweils ein Verbindungselement der ersten Hupenkontaktgruppe bzw. der zweiten Hupenkontaktgruppe bilden, wobei die Verbindungselemente jeweils parallel zur Betätigungsrichtung des Hupenmechanismus ausgerichtet sind. Die Gestaltung aller Verbindungselemente der beiden Hupenkontaktgruppen als Blechumformteile, die parallel zur Betätigungsrichtung des Hupenmechanismus ausgerichtet sind, verbessert die Miniaturisierung und ermöglicht so eine möglichst platzsparende Integration des Hupenmechanismus in ein Gassackmodul bzw. ein Fahrzeuglenkrad.

Wenn nachfolgend auf ein Verbindungselement bzw. das Verbindungselement Bezug genommen wird, so gilt dies auch für Ausführungsformen, bei denen mehr als zwei, insbesondere alle Verbindungselemente der beiden Hupenkontaktgruppen des Hupenmechanismus erfindungsgemäß ausgebildet sind.

Bei einer bevorzugten Variante der Erfindung ist vorgesehen, dass das Blechumformteil einstückig das Verbindungselement und wenigstens ein Kontaktelement bildet. Die einstückige Ausbildung des Verbindungselements mit dem wenigstens einen Kontaktelement erhöht einerseits die Stabilität der Hupenkontaktgruppe und reduziert ferner den Herstellungsaufwand. Insbesondere werden Fertigungsschritte zur Verbindung des Verbindungselements mit den Kontaktelementen vermieden, was den Zeitaufwand und damit auch die Kosten der Herstellung reduziert.

Das Blechumformteil kann außerdem wenigstens zwei, rechtwinklig zur Betätigungsrichtung voneinander beabstandet angeordnete Kontaktelemente bilden. Mit anderen Worten weist eine Hupenkontaktgruppe, insbesondere die erste Hupenkontaktgruppe und/oder die zweite Hupenkontaktgruppe, jeweils wenigstens zwei Kontaktelemente auf, die in einer Ebene, die rechtwinklig zur Betätigungsrichtung ausgerichtet ist, beabstandet zueinander angeordnet sind. Die Kontaktelemente sind also im eingebauten Zustand des Hupenmechanismus über einen Spalt zwischen dem Fahrzeuglenkrad und dem Gassackmodul verteilt angeordnet. Damit ist sichergestellt, dass auch bei einseitiger oder exzentrischer Beaufschlagung des Gassackmoduls mit einem manuellen Druck eine Auslösung des Hupenmechanismus, also ein Schließen des Hupenstromkreises, erreicht wird. Die verteilte Anordnung von Kontaktelementen in einer Ebene senkrecht zur Betätigungsrichtung erhöht somit die Funktionssicherheit des Hupenmechanismus.

In einer besonders bevorzugten Ausführungsform der Erfindung ist vorgesehen, dass das Verbindungselement ein flächiger Blechabschnitt ist, der sich in Betätigungsrichtung erstreckt, und das Kontaktelement ein flächiger Blechabschnitt ist, der sich in einer Ebene rechtwinklig zur Betätigungsrichtung erstreckt. Das Verbindungselement ist vorzugsweise parallel zu einer Betätigungsrichtung des Hupenmechanismus ausgerichtet. Die Kontaktelemente sind demnach in einem rechten Winkel zur Betätigungsrichtung des Hupenmechanismus orientiert. Damit ist sichergestellt, dass eine ausreichend große Kontaktfläche zwischen den jeweils zugeordneten Kontaktelementen unterschiedlicher Hupenkontaktgruppen bereitgestellt ist, was die Funktionssicherheit des Hupenmechanismus erhöht.

Im Wesentlichen ist insoweit vorgesehen, dass das Blechumformteil vorzugsweise durch ein Stanzblech gebildet ist, welches rechtwinklig abgewinkelt ist. Die dadurch entstehenden Schenkel des rechtwinklig abgewinkelten Stanzblechs bilden flächige Blechabschnitte, die einerseits Kontaktelemente und andererseits das Verbindungselement definieren. Auf diese Weise lässt sich einfach eine Hupenkontaktgruppe herstellen, wobei gleichzeitig ein Kompromiss zwischen einer hohen Funktionssicherheit durch flächig übereinander angeordnete Kontaktelemente und ein hoher Miniaturisierungsgrad durch die hochkant aufgerichteten Verbindungselemente erreicht werden.

Besonders bevorzugt ist es, insbesondere für die Funktionssicherheit des Hupenmechanismus, wenn die jeweils einander zugeordneten Kontaktelemente der ersten Hupenkontaktgruppe und der zweiten Hupenkontaktgruppe in Betätigungsrichtung übereinander angeordnet sind. Insbesondere können die einander zugeordneten Kontaktelemente zumindest abschnittsweise deckungsgleich übereinander angeordnet sein. Damit ist sichergestellt, dass ein hoher Überlappungsgrad besteht, so dass auch bei schrägem Druck auf ein Gassackmodul ein elektrischer Kontakt zwischen den Kontaktelementen sicher hergestellt werden kann.

In weiteren Ausführungsformen der Erfindung kann vorgesehen sein, dass das Blechumformteil ein Anschlusselement zur elektrischen Verbindung mit einer elektrischen Abschlussbuchse bildet. Insbesondere kann das Anschlusselement einstückig mit dem Blechumformteil ausgebildet sein. Damit wird eine weitere Vereinfachung der Herstellung des Hupenmechanismus erreicht. Indem das Blechumformteil einstückig das Verbindungselement, vorzugsweise die Kontaktelemente und das Anschlusselement bildet, werden ansonsten erforderliche, zusätzliche Herstellungsschritte zur Verbindung der einzelnen Elemente vermieden.

Besonders bevorzugt ist es, wenn das Anschlusselement an einem Kontaktelement ausgebildet ist. Dabei kann das Anschlusselement rechtwinklig zum Kontaktelement ausgerichtet sein. Insbesondere kann vorgesehen sein, dass das Anschlusselement parallel zur Betätigungsrichtung des Hupenmechanismus, insbesondere parallel zur Erstreckungsrichtung des Verbindungselements, ausgerichtet ist. Auf diese Weise kann das Anschlusselement einfach in entsprechende Anschlussbuchsen, beispielsweise im Boden eines Gassackmoduls, eingesteckt werden. So kann durch einen einfachen Handgriff die gesamte Hupenkontaktgruppe am Boden eines Gassackmoduls angeordnet und gleichzeitig elektrisch mittels des Anschlusselements kontaktiert werden. Dies spart Fertigungsschritte ein und führt so zu einer zeitlichen und finanziellen Effizienzsteigerung bei der Herstellung von Gassackmodulen. Selbstverständlich kann die Hupenkontaktgruppe auch in ähnlicher Weise mit einem Fahrzeuglenkrad verbunden werden. Dazu ist im Fahrzeuglenkrad vorzugsweise wenigstens eine Anschlussbuchse zur Aufnahme des Anschlusselements vorgesehen, so dass das Blechumformteil mit einem Handgriff sowohl am Fahrzeuglenkrad positionierbar, als auch elektrisch mit der Anschlussbuchse kontaktierbar ist.

Erfindungsgemäß ist ein Träger vorgesehen, mit einer Bodenebene, die sich im Wesentlichen senkrecht zur Betätigungsrichtung erstreckt, wobei das Verbindungselement der ersten elektrischen Hupenkontaktgruppe an einer ersten Anlagefläche des Trägers anliegt, die im Wesentlichen rechtwinklig zur Bodenebene des Trägers ausgerichtet sowie an die Form des Verbindungselements der ersten Hupenkontaktgruppe angepasst ist, wobei das Verbindungselement der zweiten elektrischen Hupenkontaktgruppe an einer zweiten Anlagefläche des Trägers anliegt, die im Wesentlichen rechtwinklig zur Bodenebene des Trägers ausgerichtet sowie an die Form des Verbindungselements der zweiten Hupenkontaktgruppe angepasst ist, wobei die erste Anlagefläche und die zweite Anlagefläche quer zur Betätigungsrichtung beabstandet voneinander angeordnet sind. Durch die flächige Anlage der Verbindungselemente an geometrisch angepassten Anlageflächen des Trägers sind die Blechumformteile beim Zusammenbau des Gassackmoduls gut gegen Beschädigungen oder unerwünschte Verformungen geschützt.

Der Träger kann einen Trägerboden aufweisen, der sich in der Bodenebene erstreckt, wobei ein Kontaktelement der ersten Hupenkontaktgruppe und ein zum Schließen eines Hupenstromkreises zugeordnetes Kontaktelement der zweiten Hupenkontaktgruppe auf derselben Seite des Trägerbodens angeordnet sind. Dies trägt zu einer besonders einfachen und schnellen Montage der Hupenkontaktgruppen am Träger bei.

Gemäß einer weiteren Ausführungsform der Hupenbetätigungseinheit weist der Träger einen Trägerboden auf, welcher sich in der Bodenebene erstreckt, wobei sich die erste Anlagefläche ausgehend vom Trägerboden entgegen der Betätigungsrichtung und die zweite Anlagefläche ausgehend vom Trägerboden in Betätigungsrichtung erstreckt.

Vorzugsweise sind das Verbindungselement der ersten Hupenkontaktgruppe und das Verbindungselement der zweiten Hupenkontaktgruppe mit Bezug auf die Betätigungsrichtung versetzt zueinander, insbesondere übereinander angeordnet. Übereinander angeordnet bedeutet hierbei, dass die Verbindungselemente der beiden Hupenkontaktgruppen in Betätigungsrichtung gesehen keine Überlappung aufweisen. Auch diese versetzte Anordnung der Hupenkontaktgruppen trägt zu einer besonders einfachen und schnellen Montage der Hupenbetätigungseinheit bei.

Der Träger der Hupenbetätigungseinheit kann Bestandteil eines Gassackmoduls oder eines Fahrzeuglenkrads sein. Dazu kann bevorzugt vorgesehen sein, dass der Träger zur festen Verbindung mit einem Lenkrad und/oder einem Gassackmodul angepasst ist. Insbesondere kann der Träger mit dem Lenkrad und/oder dem Gassackmodul schraubverbindbar sein. Der Träger bildet im verbundenen Zustand einen Bestandteil des Lenkrads oder des Gassackmoduls.

Die am Träger ausgebildete Anlagefläche erstreckt sich vorzugsweise in derselben Richtung, die auch das Verbindungselement am Blechumformteil einnimmt. Im Wesentlichen erstreckt sich die Anlagefläche also in Betätigungsrichtung des Hupenmechanismus. Auf diese Weise lässt sich das Verbindungselement gut an den Träger positionieren, was die Montage des Hupenmechanismus erleichtert. Dies wird insbesondere dadurch erreicht, dass die Anlagefläche der Form des Verbindungselements folgt bzw. an dessen Form angepasst ist. Vorzugsweise weisen sowohl die Anlagefläche, als auch das Verbindungselement eine mehrfach abgewinkelte Form auf, die eine eindeutige Positionierung des Verbindungselements am Träger ermöglicht. Damit wird eine Fehlpositionierung vermieden und so die Montagesicherheit erhöht.

Der Träger nimmt beide Hupenkontaktgruppen auf. Mit anderen Worten können zwei Blechumformteile am Träger fest angeordnet sein, die jeweils mehrere Kontaktelemente bilden, welche einstückig mit Verbindungselementen verbunden sind. Ferner können die Blechumformteile jeweils Anschlusselemente umfassen, die mit Anschlussbuchsen im Träger verbindbar sind. Um die Hupenfunktion nur bei Kontakt der Kontaktelemente miteinander sicherzustellen, ist es daher zweckmäßig, wenn der Träger, zumindest im Bereich der Anlagefläche, aus einem elektrisch nichtleitenden Material besteht. Insbesondere kann der Träger aus Kunststoff gebildet sein. Damit ist einerseits eine elektrische Isolierung gewährleistet. Andererseits wird auf diese Weise den Anforderungen an den Leichtbau in Kraftfahrzeugen Rechnung getragen.

Die erste Hupenkontaktgruppe und die zweite Hupenkontaktgruppe sind am Träger angeordnet, insbesondere mit dem Träger verbunden. Damit bildet der Träger gemeinsam mit beiden Hupenkontaktgruppen eine kompakte, einheitlich handhabbare Hupenbetätigungseinheit. Insbesondere kann die Hupenbetätigungseinheit auf diese Weise vormontiert bereitgestellt und so ggf. mit unterschiedlichen Gassackmodulen bzw. Fahrzeuglenkrädern kombiniert werden.

Ein nebengeordneter Aspekt der Erfindung betrifft ein Gassackmodul, insbesondere für einen Fahrerairbag, mit einem zuvor beschriebenen Hupenmechanismus und/oder einer zuvor erläuterten Hupenbetätigungseinheit. Ferner betrifft die Erfindung ein Lenkrad, insbesondere ein Fahrzeuglenkrad, vorzugsweise zur Aufnahme eines Gassackmoduls, mit einem zuvor beschriebenen Hupenmechanismus und/oder einer zuvor erläuterten Hupenbetätigungseinheit.

Die Erfindung betrifft außerdem ein Fahrzeuginsassensicherheitssystem, das einen Hupenmechanismus und/oder eine Hupenbetätigungseinheit und/oder ein Gassackmodul und/oder ein Lenkrad umfasst, wie sie zuvor beschrieben sind. Außerdem wird im Rahmen der vorliegenden Anmeldung ein Fahrzeug, insbesondere ein mehrspuriges Landfahrzeug, beispielsweise ein Personenkraftwagen, mit einem Hupenmechanismus und/oder einer Hupenbetätigungseinheit und/oder einem Gassackmodul und/oder einem Lenkrad und/oder einem Fahrzeuginsassensicherheitssystem offenbart, dass die zuvor beschriebenen Merkmale einzeln oder in Kombination miteinander aufweist.

Die Erfindung wird im Folgenden anhand eines Ausführungsbeispiels unter Bezugnahme auf die beigefügten, schematischen Zeichnungen näher erläutert. Darin zeigen
- Figur 1 eine perspektivische Unteransicht eines Gassackmoduls mit einem Hupenmechanismus nach einem bevorzugten Ausführungsbeispiel, wobei der Hupenmechanismus zusammen mit einem Träger als einheitlich handhabbare, erfindungsgemäße Hupenbetätigungseinheit ausgebildet ist; und
- Figur 2 die Hupenbetätigungseinheit gemäß Figur 1.

Der in den Zeichnungen dargestellte Hupenmechanismus 10 umfasst eine erste elektrische Hupenkontaktgruppe 11 und eine zweite elektrische Hupenkontaktgruppe 12. Die Hupenkontaktgruppen 11, 12 sind in einem Ruhezustand elektrisch voneinander isoliert. Die Hupenkontaktgruppen 11, 12 weisen jeweils mehrere Kontaktelemente 16 auf, die von einer Ruhestellung in eine Betätigungsstellung relativ zueinander bewegbar sind. In der Ruhestellung sind die Kontaktelemente 16 unterschiedlicher Hupenkontaktgruppen 11, 12 voneinander beabstandet, so dass die Hupenkontaktgruppen 11, 12 elektrisch getrennt sind. In einem Betätigungszustand berühren sich wenigstens zwei Kontaktelemente 16, die jeweils unterschiedlichen Hupenkontaktgruppen 11, 12 zugeordnet sind, so dass eine elektrische Verbindung zwischen den Hupenkontaktgruppen 11, 12 hergestellt ist. Dadurch wird ein Hupenstromkreis geschlossen, so dass ein akustisches Warnsignal ausgelöst wird.

Die Hupenkontaktgruppen 11, 12 sind bei dem dargestellten Ausführungsbeispiel jeweils durch ein Blechumformteil 13, 14 gebildet. Das Blechumformteil ist im Wesentlichen rechtwinklig abgeknickt und bildet so zwei Schenkel, wobei ein Schenkel die Kontaktelemente 16 und ein weiterer Schenkel ein Verbindungselement 15 bildet. Konkret ist vorgesehen, dass die Kontaktelemente 16 durch ein Verbindungselement 15 miteinander elektrisch verbunden sind, wobei das Verbindungselement 15 rechtwinklig zu den Kontaktelementen 16 ausgerichtet ist.

Das Verbindungselement 15 erstreckt sich im montierten Zustand des Hupenmechanismus 10 entlang einer Betätigungsrichtung 18 des Hupenmechanismus 10 bzw. der Kontaktelemente 16.

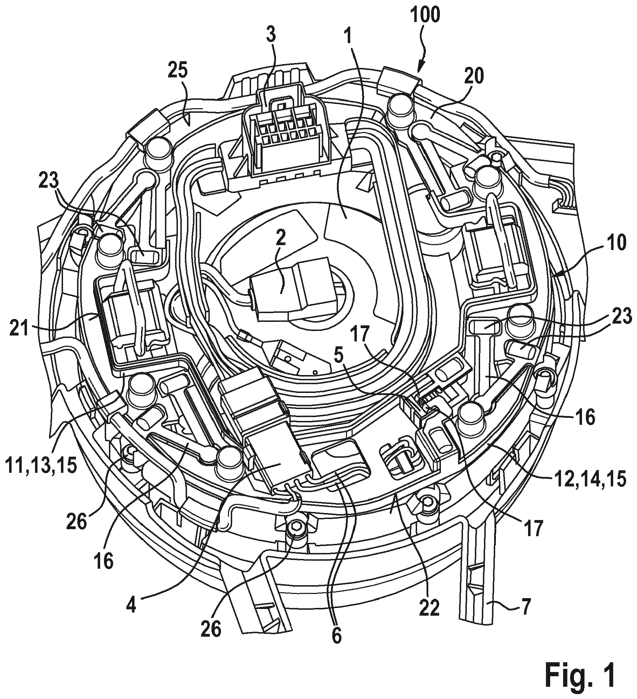

Der Hupenmechanismus 10 ist in Fig. 1 im Einbauzustand innerhalb eines Lenkrads 7 gezeigt. Das Lenkrad 7 nimmt insbesondere ein Gassackmodul 1 auf, wobei die Betätigung des Hupenmechanismus 10 durch eine Relativbewegung zwischen dem Gassackmodul 1 und dem Lenkrad 7 erfolgt. Auf diese Funktionsweise wird später näher eingegangen.

Der Hupenmechanismus 10 ist bei dem in den Zeichnungen dargestellten Ausführungsbeispiel in einen Träger 20 integriert bzw. mit einem Träger 20 verbunden. Gemeinsam mit dem Träger 20 bildet der Hupenmechanismus 10 eine Hupenbetätigungseinheit 100. Die Hupenbetätigungseinheit 100, insbesondere der Träger 20, ist fest mit dem Lenkrad 7 verbunden. Insbesondere ist in Fig. 1 erkennbar, dass der Träger 20 mit dem Lenkrad 7 schraubverbunden ist. Dazu weist der Träger 20 Befestigungslöcher 24 auf, durch welche Schrauben 26 geführt sind. Die Schrauben 26 greifen in das Lenkrad 7 ein, so dass die Hupenbetätigungseinheit 100 fest mit dem Lenkrad 7 verbunden ist.

Der Träger 20 weist zwei Anlageflächen 21, 22 auf, die sich im Wesentlichen parallel zur Betätigungsrichtung 18 des Hupenmechanismus 10 erstrecken. Dabei ist eine erste Anlagefläche 21 an einer senkrecht zu einer Bodenebene 25 des Trägers 20 angeordneten Rippe bzw. Wand 28 vorgesehen. Die Rippe bzw. die Wand 28 ist im Wesentlichen entlang einer Innenkontur des Trägers 20 angeordnet. Entlang eines Außenumfangs des Trägers 20 ist hingegen eine zweite Anlagefläche 22 vorgesehen. Die erste Anlagefläche 21 und die zweite Anlagefläche 22 sind insoweit beabstandet voneinander angeordnet.

Die Hupenkontaktgruppen 11, 12 sind so auf dem Träger 20 angeordnet, dass die Verbindungselemente 15 der Hupenkontaktgruppen 11, 12 jeweils mit Flächenkontakt an den Anlageflächen 21, 22 angeordnet sind. Konkret weist der Hupenmechanismus 10 eine erste elektrische Hupenkontaktgruppe 11 auf, die durch ein erstes Blechumformteil 13 gebildet ist. Das erste Blechumformteil 13 weist ein Verbindungselement 15 auf, das parallel zur ersten Anlagefläche 21 am Träger 20 ausgerichtet ist. Das Verbindungselement 15 der ersten Hupenkontaktgruppe 11 liegt im Einbauzustand flächenbündig an der ersten Anlagefläche 21 an.

Die erste Hupenkontaktgruppe 11 umfasst ferner mehrere Kontaktelemente 16, die sich rechtwinklig zum Verbindungselement 15 erstrecken und mit Aufnahmeelementen 23 des Trägers 20 zusammenwirken. Die Aufnahmeelemente 23 ermöglichen eine Positionierung der Kontaktelemente 16. Außerdem können die Aufnahmeelemente 23 als Schnapphaken ausgebildet sein, so dass durch Aufstecken der Kontaktelemente 16 eine formschlüssige Verbindung zwischen dem ersten Blechumformteil 12 und dem Träger 20 hergestellt wird. Die Kontaktelemente 16 bilden freischwingende Enden aus, die sich zumindest abschnittsweise mit Kontaktelementen 16 der zweiten Hupenkontaktgruppe 12 überlappen. Konkret sind die Kontaktelemente 16 der ersten Hupenkontaktgruppe 11 und der zweiten Hupenkontaktgruppe 12 zumindest abschnittsweise überlappend, insbesondere abschnittsweise übereinander in Betätigungsrichtung des Hupenmechanismus 10 angeordnet. Dabei besteht in einer Ruhestellung ein Abstand zwischen den jeweils einander zugeordneten Kontaktelementen 16, so dass der Hupenstromkreis geöffnet ist. Durch eine Relativbewegung zwischen dem Gassackmodul 1 und dem Lenkrad 7 erfolgt eine Relativbewegung zwischen den jeweils einander zugeordneten Kontaktelementen 16 unterschiedlicher Hupenkontaktgruppen 11, 12, so dass sich die Kontaktelemente 16 berühren und den Hupenstromkreis schließen.

Das zweite Blechumformteil 14, das die zweite Hupenkontaktgruppe 12 bildet, ist im Wesentlichen analog zu dem ersten Blechumformteil 13 ausgebildet. Insbesondere umfasst das zweite Blechumformteil 14 mehrere Kontaktelemente 16, die sich parallel zu einer Bodenebene 25 des Trägers 20 erstrecken. Senkrecht zur Bodenebene 25 des Trägers 20 erstreckt sich ein Verbindungselement 15, das einstückig mit den Kontaktelementen 16 verbunden ist. Das Verbindungselement 15 ist konkret parallel zur Betätigungsrichtung 18 des Hupenmechanismus 10 ausgerichtet.

Wie bei dem ersten Blechumformteil 13 ist auch bei dem zweiten Blechumformteil 14 vorgesehen, dass die Kontaktelemente 16 zur Befestigung des Blechumformteils 14 an dem Träger 20 mit Aufnahmeelementen 23 zusammenwirken. Die Aufnahmeelemente 23 können als Schnapphaken ausgebildet sein. Somit sind beide Hupenkontaktgruppen 11, 12 bzw. Blechumformteile 13, 14 fest mit dem Träger 20 verbunden, insbesondere formschlüssig verbunden. Der Träger 20 ist dabei bevorzugt ein vom Gassackmodul 1 und vom Lenkrad 7 separater Träger, sodass eine separate, vormontierte Hupenbetätigungseinheit 100 entsteht. Später kann die Hupenbetätigungseinheit 100 dann über den Träger 20 wahlweise fest mit dem Gassackmodul 1 oder dem Lenkrad 7 verbunden werden.

Wie in Fig. 1 weiter ersichtlich ist, umfassen beide Blechumformteile 13, 14 jeweils ein Anschlusselement 17. Das Anschlusselement 17 bildet einen Stecckontakt, insbesondere in Form eines Flachsteckers, der im Wesentlichen senkrecht zu den Kontaktelementen 16 ausgerichtet ist. Insbesondere erstreckt sich das Anschlusselement 17 in Betätigungsrichtung 18 des Hupenmechanismus 10. Auf diese Weise können das erste Blechumformteil 12 und das zweite Blechumformteil 13 mechanisch über die Aufnahmeelemente 23 und gleichzeitig elektrisch über die Anschlusselemente 17 an dem Träger 20 angebunden werden. Der Träger 20 weist zur elektrischen Kontaktierung eine Anschlussbuchse 5 auf, die die Anschlusselemente 17 der Blechumformteile 13, 14 aufnimmt.

Die Anschlussbuchse 5 ist ferner mit einem Funktionsstecker 4 elektrisch verbunden. Die elektrische Verbindung zwischen der Anschlussbuchse 5 und dem Funktionsstecker 4 erfolgt über Verbindungskabel 6. Der Funktionsstecker 4 nimmt zusätzlich weitere Verbindungskabel auf, die beispielsweise Signale von Betätigungselementen an einem Multifunktionslenkrad übermitteln. Der Funktionsstecker 4 ermöglicht so die Verbindung aller Funktionen innerhalb eines Lenkrads mit dem Fahrzeug. Vom Funktionsstecker 4 verläuft ein Kabel zu einem Lenkradstecker 3, der die elektrische Verbindung des Lenkrads insgesamt mit einem Fahrzeug ermöglicht. Der Lenkradstecker 3 ist zusätzlich über entsprechende elektrische Leitungen mit einem Modulstecker 2 gekoppelt, der eine elektrische Anbindung des Gassackmoduls 1 an die Fahrzeugelektrik ermöglicht.

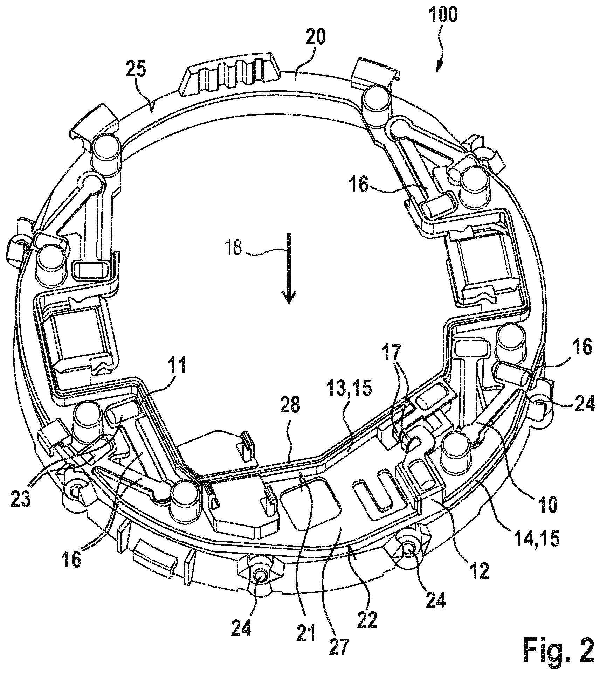

In Fig. 2 ist die Hupenbetätigungseinheit 100 im Detail gezeigt. Erkennbar ist der Träger 20, in den der Hupenmechanismus 10 integriert ist. Der Hupenmechanismus 10 umfasst zwei Blechumformteile 13, 14, die jeweils ein Verbindungselement 15 und mehrere Kontaktelemente 16 bilden. Die Blechumformteile 13, 14 sind jeweils einstückig ausgebildet. Jedes Blechumformteil 13, 14 bildet eine Hupenkontaktgruppe 11, 12.

In Fig. 2 sind die Anschlusselemente 17 gut erkennbar, die im Wesentlichen als Steckverbinder ausgebildet sind. In Fig. 2 ist außerdem die mehrfach abgewinkelte Struktur der Blechumformteile 13, 14 ersichtlich. Es wird deutlich, dass durch die Verwendung von Blechumformteilen, die einfach an komplexe Formvorgaben anpassbar sind, eine gute Raumausnutzung im Bereich des Trägers 20 ermöglicht wird. Insgesamt wird durch die Verwendung von Blechumformteilen 13, 14 mit den im Wesentlichen hochkant auf der Bodenebene 25 des Trägers 20 stehenden Verbindungselementen, eine verbesserte Miniaturisierung der Hupenbetätigungseinheit erreicht. Konkret sind die flächigen Blechabschnitte der Blechumformteile 13, 14 überwiegend, das heißt zu wenigstens 50%, insbesondere wenigstens 75%, parallel zur Betätigungsrichtung ausgerichtet, um eine besonders kompakte Bauweise zu erreichen. Ausnahmen bilden lediglich die federnden Kontaktelemente 16 sowie optional Anschlusselemente 17 und/oder Aufnahmeelemente 23, welche sich in einer Ebene senkrecht zur Betätigungsrichtung 18 erstrecken.

In Fig. 2 sind auch gut die Befestigungslöcher 24 erkennbar, die zur festen Verbindung des Trägers 20 bzw. insgesamt der Hupenbetätigungseinheit 100 mit einem Lenkrad 7 vorgesehen sind. In diesem Zusammenhang wird darauf hingewiesen, dass die Hupenbetätigungseinheit 100 nicht nur mit einem Lenkrad 7, sondern auch mit einem Gassackmodul 1 fest verbindbar ist. Die Hupenbetätigungseinheit 100 kann also entweder am Gassackmodul 1 oder am Lenkrad 7 fest angebracht sein. Für die Funktion der Hupenbetätigungseinheit 100 ist dies im Wesentlichen unerheblich.

Anhand der Figur 2 wird nochmals besonders deutlich, dass sich die Bodenebene 25 des Trägers 20 im Wesentlichen senkrecht zur Betätigungsrichtung 18 erstreckt, wobei die erste Anlagefläche 21 des Trägers 20 etwa rechtwinklig zur Bodenebene 25 ausgerichtet sowie an die Form des Verbindungselements 15 der ersten Hupenkontaktgruppe 11 angepasst ist, und wobei die zweite Anlagefläche 22 des Trägers 20 etwa rechtwinklig zur Bodenebene 25 ausgerichtet sowie an die Form des Verbindungselements 15 der zweiten Hupenkontaktgruppe 12 angepasst ist.

Ferner weist der Träger 20 einen durch die Bodenebene 25 definierten Trägerboden 27 auf, wobei sich die Rippe bzw. Wand 28 mit der ersten Anlagefläche 21 ausgehend vom Trägerboden 27 entgegen der Betätigungsrichtung 18 und eine Trägerwand mit der zweiten Anlagefläche 21 ausgehend vom Trägerboden 27 in Betätigungsrichtung 18 erstreckt. Folglich sind das Verbindungselement 15 der ersten Hupenkontaktgruppe 11 und das Verbindungselement 15 der zweiten Hupenkontaktgruppe 12 mit Bezug auf die Betätigungsrichtung 18 versetzt zueinander angeordnet. Gemäß Figur 2 weisen die Verbindungselemente 15 der beiden Hupenkontaktgruppen 11, 12, in Betätigungsrichtung 18 gesehen, keine Überlappung auf, sondern sind sogar etwas beabstandet voneinander angeordnet. Die in grober Vereinfachung etwa C- oder U-förmigen Hupenkontaktgruppen 11, 12 lassen sich dadurch mit besonders geringem Aufwand an dem etwa kreiszylindrischen Träger 20 montieren, indem sie (in Betätigungsrichtung 18 übereinander) einfach von außen radial auf den Träger 20 aufgeschoben werden. Demgegenüber wäre eine Montage von radial innen und/oder eine in Betätigungsrichtung 18 überlappende Montage deutlich aufwendiger.

Ferner wirkt es sich mit Blick auf die Montage der Hupenkontaktgruppen 11, 12, eine einfache Trägerfertigung sowie eine hohe Funktionssicherheit positiv aus, wenn die Kontaktelemente 16 der ersten Hupenkontaktgruppe 11 und die zum Schließen eines Hupenstromkreises zugeordneten Kontaktelemente 16 der zweiten Hupenkontaktgruppe 12 auf derselben Seite des Trägerbodens 27 angeordnet sind.

Die Funktionsweise der Hupenbetätigungseinheit beruht darauf, einen Stromkreis, insbesondere einen Hupenstromkreis bereitzustellen, der in einem Ruhezustand unterbrochen ist und durch Berührung der Kontaktelemente 16 unterschiedlicher Hupenkontaktgruppen 11, 12 geschlossen wird. Dadurch kann der Strom fließen und das akustische Warnsignal wird ausgelöst. In der Ruhestellung des Hupenmechanismus 10 sind die einander zugeordneten Kontaktelemente 16 des ersten Blechumformteils 13 und des zweiten Blechumformteils 14 voneinander beabstandet angeordnet.

Da die Kontaktelemente 16 jeweils freitragende Federelemente bilden, sind sie biegsam und können sich so relativ zueinander bewegen. Die Relativbewegung der Kontaktelemente 16 wird durch eine Relativbewegung zwischen dem Gassackmodul 1 und dem Lenkrad 7 eingeleitet. Dazu sind am Gassackmodul 1 vorzugsweise Betätigungsfortsätze angeordnet, die im Wesentlichen deckungsgleich bzw. überlappend über den jeweils einander zugeordneten Kontaktelementen 16 ausgerichtet sind. Durch eine Relativbewegung zwischen dem Gassackmodul 1 und dem Lenkrad 7, wobei das Gassackmodul 1 in das Lenkrad 7 eintaucht, drücken die Betätigungsfortsätze des Gassackmoduls 1 auf die Kontaktelemente 16 des ersten Blechumformteils 13 bzw. der ersten Hupenkontaktgruppe 11. Die Kontaktelemente 16 der ersten Hupenkontaktgruppe 11 werden dadurch ausgelenkt und bewegen sich zumindest abschnittsweise relativ auf die Kontaktelement 16 der zweiten Hupenkontaktgruppe 12 zu. Sobald sich die Kontaktelemente 16 der ersten Hupenkontaktgruppe 11 und der zweiten Hupenkontaktgruppe 12 berühren, ist der Hupenstromkreis geschlossen und das akustische Warnsignal ertönt.

### Bezugszeichenliste

- 1: Gassackmodul
- 2: Modulstecker
- 3: Lenkradstecker
- 4: Funktionsstecker
- 5: Anschlussbuchse
- 6: Verbindungskabel
- 7: Fahrzeuglenkrad
- 10: Hupenmechanismus
- 11: Erste Hupenkontaktgruppe
- 12: Zweite Hupenkontaktgruppe
- 13: Erstes Blechumformteil
- 14: Zweites Blechumformteil
- 15: Verbindungselement
- 16: Kontaktelement
- 17: Anschlusselement
- 18: Betätigungsrichtung
- 20: Träger
- 21: Erste Anlagefläche
- 22: Zweite Anlagefläche
- 23: Aufnahmeelement
- 24: Befestigungslöcher
- 25: Bodenebene
- 26: Schraube
- 27: Trägerboden
- 28: Wand
- 100: Hupenbetätigungseinheit

## Patentansprüche

1. Hupenbetätigungseinheit (100), insbesondere für ein mit einem Gassackmodul (1) ausgestattetes Fahrzeuglenkrad (7), mit
einer ersten elektrischen Hupenkontaktgruppe (11) und einer zweiten elektrischen Hupenkontaktgruppe (12), die jeweils wenigstens zwei durch ein Verbindungselement (15) elektrisch verbundene Kontaktelemente (16) aufweisen,
wobei die Kontaktelemente (16) der Hupenkontaktgruppen (11, 12) entlang einer Betätigungsrichtung (18) relativ zueinander bewegbar sind derart, dass sich wenigstens zwei einander zugeordnete Kontaktelemente (16) der ersten und zweiten Hupenkontaktgruppe (11, 12) zum Schließen eines Hupenstromkreises berühren können, und
wobei das Verbindungselement (15) der ersten Hupenkontaktgruppe (11) und der zweiten Hupenkontaktgruppe (12) jeweils durch ein Blechumformteil (13, 14) gebildet ist,
wobei ein Träger (20) vorgesehen ist, mit einer Bodenebene (25), die sich im Wesentlichen senkrecht zur Betätigungsrichtung (18) erstreckt,
**dadurch gekennzeichnet, dass** das Verbindungselement (15) der ersten Hupenkontaktgruppe (11) und der zweiten Hupenkontaktgruppe (12) jeweils parallel zur Betätigungsrichtung (18) ausgerichtet ist, und, dass
das Verbindungselement (15) der ersten elektrischen Hupenkontaktgruppe (11) an einer ersten Anlagefläche (21) des Trägers (20) anliegt, die im Wesentlichen rechtwinklig zur Bodenebene (25) des Trägers (20) ausgerichtet sowie an die Form des Verbindungselements (15) der ersten Hupenkontaktgruppe (11) angepasst ist,
wobei das Verbindungselement (15) der zweiten elektrischen Hupenkontaktgruppe (12) an einer zweiten Anlagefläche (22) des Trägers (20) anliegt, die im Wesentlichen rechtwinklig zur Bodenebene (25) des Trägers (20) ausgerichtet sowie an die Form des Verbindungselements (15) der zweiten Hupenkontaktgruppe (12) angepasst ist,
wobei die erste Anlagefläche (21) und die zweite Anlagefläche (22) quer zur Betätigungsrichtung (18) beabstandet voneinander angeordnet sind.

2. Hupenbetätigungseinheit (100) nach Anspruch 1, **dadurch gekennzeichnet, dass** das Blechumformteil (13, 14) einstückig das Verbindungselement (15) und wenigstens ein Kontaktelement (16) bildet, insbesondere wobei das Blechumformteil (13, 14) einstückig wenigstens zwei, rechtwinklig zur Betätigungsrichtung (18) voneinander beabstandet angeordnete Kontaktelemente (16) bildet.

3. Hupenbetätigungseinheit (100) nach einem der vorhergehenden Ansprüche, **dadurch gekennzeichnet, dass** das Verbindungselement (15) ein flächiger Blechabschnitt ist, der sich in Betätigungsrichtung (18) erstreckt, und das Kontaktelement (16) ein flächiger Blechabschnitt ist, der sich in einer Ebene rechtwinklig zur Betätigungsrichtung (18) erstreckt.

4. Hupenbetätigungseinheit (100) nach einem der vorhergehenden Ansprüche, **dadurch gekennzeichnet, dass** die jeweils einander zugeordneten Kontaktelemente (16) der ersten Hupenkontaktgruppe (11) und der zweiten Hupenkontaktgruppe (12) in Betätigungsrichtung (18) übereinander angeordnet sind.

5. Hupenbetätigungseinheit (100) nach einem der vorhergehenden Ansprüche, **dadurch gekennzeichnet, dass** das Blechumformteil (13, 14) ein Anschlusselement (17) zur elektrischen Verbindung mit einer elektrischen Anschlussbuchse (5) bildet, insbesondere wobei das Anschlusselement (17) an einem Kontaktelement (16) ausgebildet ist.

6. Hupenbetätigungseinheit (100) nach einem der vorhergehenden Ansprüche, **dadurch gekennzeichnet, dass** der Träger (20) einen durch die Bodenebene (25) definierten Trägerboden (27) aufweist, wobei ein Kontaktelement (16) der ersten Hupenkontaktgruppe (11) und ein zum Schließen eines Hupenstromkreises zugeordnetes Kontaktelement (16) der zweiten Hupenkontaktgruppe (12) auf derselben Seite des Trägerbodens (27) angeordnet sind.

7. Hupenbetätigungseinheit (100) nach einem der vorhergehenden Ansprüche, **dadurch gekennzeichnet, dass** der Träger (20) einen durch die Bodenebene (25) definierten Trägerboden (27) aufweist, wobei sich die erste Anlagefläche (21) ausgehend vom Trägerboden (27) entgegen der Betätigungsrichtung (18) und die zweite Anlagefläche (21) ausgehend vom Trägerboden (27) in Betätigungsrichtung (18) erstreckt.

8. Hupenbetätigungseinheit (100) nach einem der vorhergehenden Ansprüche, **dadurch gekennzeichnet, dass** das Verbindungselement (15) der ersten Hupenkontaktgruppe (11) und das Verbindungselement (15) der zweiten Hupenkontaktgruppe (12) mit Bezug auf die Betätigungsrichtung (18) versetzt zueinander angeordnet sind.

9. Hupenbetätigungseinheit (100) nach einem der vorhergehenden Ansprüche, **dadurch gekennzeichnet, dass** der Träger (20), zumindest im Bereich der Anlagefläche (21, 22), aus einem elektrisch nichtleitenden Material, insbesondere aus Kunststoff, besteht.

10. Hupenbetätigungseinheit (100) nach einem der vorhergehenden Ansprüche, **dadurch gekennzeichnet, dass** die erste Hupenkontaktgruppe (11) und die zweite Hupenkontaktgruppe (12) am Träger (20) angeordnet sind.

11. Gassackmodul (1), insbesondere Fahrer-Gassackmodul, mit einer Hupenbetätigungseinheit (100) nach einem der vorhergehenden Ansprüche, wobei ein Träger (20) der Hupenbetätigungseinheit (100) fest mit dem Gassackmodul (1) verbunden ist.

12. Lenkrad mit einer Hupenbetätigungseinheit (100) nach einem der Ansprüche 1 bis 10, wobei ein Träger (20) der Hupenbetätigungseinheit (100) fest mit dem Lenkrad (7) verbunden ist.

## Claims

1. A horn actuation unit (100), in particular for a vehicle steering wheel (7) equipped with an airbag module (1) comprising
a first electrical horn contact group (11) and a second electrical horn contact group (12) each having at least two contact elements (16) which are electrically connected via a connecting element (15),
wherein the contact elements (16) of the horn contact groups (11, 12) are movable relative to each other along an actuating direction (18) so that at least two contact elements (16) associated with each other of the first and second horn contact group (11, 12) can contact each other for closing a horn circuit and
wherein the connecting element (15) of the first horn contact group (11) and of the second horn contact group (12) is formed by a formed sheet metal part (13, 14),
wherein a carrier (20) is provided including a ground plane (25) extending substantially perpendicularly to the activation direction (18),
**characterized in that** the connecting element (15) of the first horn contact group (11) and the second horn contact group (12) is respectively aligned in parallel to the activation direction (18) and that
the connecting element (15) of the first electrical horn contact group (11) is adjacent to a first contact surface (21) of the carrier (20) which is substantially aligned at right angles to the ground plane (25) of the carrier (20) and is adapted to the form of the connecting element (15) of the first horn contact group (11),
wherein the connecting element (15) of the second electrical horn contact group (12) is adjacent to a second contact surface (22) of the carrier (20) which is substantially aligned at right angles to the ground plane (25) of the carrier (20) and is adapted to the form of the connecting element (15) of the second horn contact group (12),
wherein the first contact surface (21) and the second contact surface (22) are arranged to be spaced apart from each other transversely to the activation direction (18).

2. The horn activation unit (100) according to claim 1, **characterized in that** the formed sheet metal part (13, 14) forms integrally the connecting element (15) and at least one contact element (16), especially wherein the formed sheet metal part (13, 14) forms integrally at least two contact elements (16) arranged to be spaced apart from each other at right angles to the activation direction (18).

3. The horn activation unit (100) according to any one of the preceding claims, **characterized in that** the connecting element (15) is a plane sheet metal portion extending in the activation direction (18) and that the contact element (16) is a plane sheet metal portion extending in a plane at right angles to the activation direction (18).

4. The horn activation unit (100) according to any one of the preceding claims, **characterized in that** the contact elements (16) of the first horn contact group (11) and the second horn contact group (12) associated with each other are arranged above each other in the activation direction (18).

5. The horn activation unit (100) according to any one of the preceding claims, **characterized in that** the formed sheet metal part (13, 14) forms a connector element (17) for electric connection with an electrical connector socket (5), especially wherein the connector element (17) is configured on a contact element (16).

6. The horn activation unit (100), according to anyone of the preceding claims, **characterized in that** the carrier (20) has a carrier base (27) defined by the ground plane (25), wherein a contact element (16) of the first horn contact group (11) and a contact element (16) of the second horn contact group (12) assigned for closing a horn circuit are arranged on the same side of the carrier base (27).

7. The horn activation unit (100), according to anyone of the preceding claims, **characterized in that** the carrier (20) has a carrier base (27) defined by the ground plane (25), wherein the first contact surface (21) extends from the carrier base (27) against the activation direction (18) and the second contact surface (21) extends from the carrier base (27) in the activation direction (18).

8. The horn activation unit (100), according to anyone of the preceding claims, **characterized in that** the connecting element (15) of the first horn contact group (11) and the connecting element (15) of the second horn contact group (12) are arranged to be offset against each other with respect to the activation direction (18).

9. The horn activation unit (100), according to anyone of the preceding claims, **characterized in that** the carrier (20) is at least in the area of the contact surface (21, 22) made from an electrically non-conductive material, especially from plastic.

10. The horn activation unit (100), according to anyone of the preceding claims, **characterized in that** the first horn contact group (11) and the second horn contact group (12) are arranged on the carrier (20).

11. An airbag module (1), especially a driver airbag module comprising a horn activation unit (100) according to any one of the preceding claims, wherein a carrier (20) of the horn activation unit (100) is tightly connected to the airbag module (1).

12. A steering wheel comprising a horn activation unit (100) according to any one of the claims 1 to 10, wherein a carrier (20) of the horn activation unit (100) is tightly connected to the steering wheel (7).

## Revendications

1. Unité d'actionnement d'avertisseur sonore (100), notamment pour un volant de direction de véhicule (7) équipé d'un module airbag (1), comprenant
un premier groupe de contact électrique d'avertisseur sonore (11) et un deuxième groupe de contact électrique d'avertisseur sonore (12), qui présentent chacun au moins deux éléments de contact (16) reliés électriquement par un élément de liaison (15),
pour lequel les éléments de contact (16) des groupes de contacts d'avertisseur sonore (11, 12) sont mobiles l'un par rapport à l'autre le long d'une direction d'actionnement (18) de telle sorte qu'au moins deux éléments de contact (16) associés l'un à l'autre du premier et du deuxième groupe de contacts d'avertisseur sonore (11, 12) peuvent se toucher pour fermer un circuit électrique d'avertisseur sonore, et
pour lequel l'élément de liaison (15) du premier groupe de contact d'avertisseur sonore (11) et du deuxième groupe de contact d'avertisseur sonore (12) est formé respectivement par une pièce en tôle formée (13, 14),
pour lequel un support (20) est prévu, avec un fond plan (25) qui s'étend sensiblement perpendiculairement à la direction d'actionnement (18),
**caractérisé en ce que** l'élément de liaison (15) du premier groupe de contacts d'avertisseur sonore (11) et du deuxième groupe de contacts d'avertisseur sonore (12) est orienté respectivement parallèlement à la direction d'actionnement (18), et **en ce que**
l'élément de liaison (15) du premier groupe de contact électrique d'avertisseur sonore (11) s'appuie sur une première surface d'appui (21) du support (20), qui est orientée sensiblement perpendiculairement au fond plan (25) du support (20) et est adaptée à la forme de l'élément de liaison (15) du premier groupe de contact d'avertisseur sonore (11),
pour lequel l'élément de liaison (15) du deuxième groupe de contacts électriques d'avertisseur sonore (12) s'appuie sur une deuxième surface d'appui (22) du support (20), qui est orientée sensiblement perpendiculairement au fond plan (25) du support (20) et est adaptée à la forme de l'élément de liaison (15) du deuxième groupe de contacts d'avertisseur sonore (12),
pour lequel la première surface d'appui (21) et la deuxième surface d'appui (22) sont disposées à une certaine distance l'une de l'autre transversalement à la direction d'actionnement (18).

2. Unité d'actionnement d'avertisseur sonore (100) selon la revendication 1, **caractérisée en ce que** la pièce en tôle formée (13, 14) forme d'un seul tenant l'élément de liaison (15) et au moins un élément de contact (16), en particulier pour lequel la pièce en tôle formée (13, 14) forme d'un seul tenant au moins deux éléments de contact (16) disposés à distance l'un de l'autre perpendiculairement à la direction d'actionnement (18).

3. Unité d'actionnement d'avertisseur sonore (100) selon l'une des revendications précédentes, **caractérisée en ce que** l'élément de liaison (15) est une section de tôle plate qui s'étend dans la direction d'actionnement (18), et l'élément de contact (16) est une section de tôle plate qui s'étend dans un plan perpendiculaire à la direction d'actionnement (18).

4. Unité d'actionnement d'avertisseur sonore (100) selon l'une des revendications précédentes, **caractérisée en ce que** les éléments de contact (16) respectivement associés les uns aux autres du premier groupe de contact d'avertisseur sonore (11) et du deuxième groupe de contact d'avertisseur sonore (12) sont disposés les uns au-dessus des autres dans la direction d'actionnement (18).

5. Unité d'actionnement d'avertisseur sonore (100) selon l'une des revendications précédentes, **caractérisée en ce que** la pièce en tôle formée (13, 14) forme un élément de connexion (17) pour la connexion électrique avec une douille de connexion électrique (5), en particulier pour laquelle l'élément de connexion (17) est formé sur un élément de contact (16).

6. Unité d'actionnement d'avertisseur sonore (100) selon l'une des revendications précédentes, **caractérisée en ce que** le support (20) présente un fond de support (27) défini par le fond plan (25), pour lequel un élément de contact (16) du premier groupe de contact d'avertisseur sonore (11) et un élément de contact (16) du deuxième groupe de contact d'avertisseur sonore (12) associé à la fermeture d'un circuit électrique d'avertisseur sonore sont disposés du même côté du fond de support (27).

7. Unité d'actionnement d'avertisseur sonore (100) selon l'une des revendications précédentes, **caractérisée en ce que** le support (20) présente un fond de support (27) défini par le fond plan (25), pour lequel la première surface d'appui (21) s'étend à partir du fond de support (27) en sens inverse du sens d'actionnement (18) et la deuxième surface d'appui (21) s'étend à partir du fond de support (27) dans le sens d'actionnement (18).

8. Unité d'actionnement d'avertisseur sonore (100) selon l'une des revendications précédentes, **caractérisée en ce que** l'élément de liaison (15) du premier groupe de contact d'avertisseur sonore (11) et l'élément de liaison (15) du deuxième groupe de contact d'avertisseur sonore (12) sont décalés l'un par rapport à l'autre par rapport à la direction d'actionnement (18).

9. Unité d'actionnement d'avertisseur sonore (100) selon l'une des revendications précédentes, **caractérisée en ce que** le support (20), au moins dans la zone de la surface d'appui (21, 22), est constitué d'un matériau non conducteur de l'électricité, notamment en matière plastique.

10. Unité d'actionnement d'avertisseur sonore (100) selon l'une des revendications précédentes, **caractérisée en ce que** le premier groupe de contacts d'avertisseur sonore (11) et le deuxième groupe de contacts d'avertisseur sonore (12) sont disposés sur le support (20).

11. Module airbag (1), en particulier module airbag conducteur, avec une unité d'actionnement d'avertisseur sonore (100) selon l'une des revendications précédentes, pour lequel un support (20) de l'unité d'actionnement d'avertisseur sonore (100) est relié fixement au module airbag (1).

12. Volant de direction équipé d'une unité de commande d'avertisseur sonore (100) selon l'une quelconque des revendications 1 à 10, pour lequel un support (20) de l'unité de commande d'avertisseur sonore (100) est solidaire du volant de direction (7).
